# EUROPEAN PATENT SPECIFICATION

(11) **EP 2 100 013 B1**
(45) Date of publication and mention of the grant of the patent: **14.01.2015**
(21) Application number: 07825516.3
(22) Date of filing: 28.10.2007
(51) Int. Cl.: F01P 11/04

(54) **A MULTIWAY DISTRIBUTION CONNECTOR ELEMENT FOR COOLING CIRCUITS**
MEHRWEGE-VERTEILUNGSVERBINDERELEMENT FÜR KÜHLKREISE
ÉLÉMENT DE RACCORD DE DISTRIBUTION MULTIVOIE POUR REFROIDIR DES CIRCUITS

(30) Priority: 27.10.2006 TR 200605972
(43) Date of publication of application: 16.09.2009
(73) Proprietor: Teklas Kaucuk Sanayi Ve Ticaret Anonim Sirketi, 41400 Gebze (TR)
(72) Inventor: BICICI, Banu, Gebze 41400 Kocaeli (TR); BOZKURTLY, Murat, Gebze 41400 Kocaeli (TR); SONMEZ, Bekir, Gebze 41400 Kocaeli (TR)
(74) Representative: Yavuzcan, Alev
(86) International application number: PCT/IB2007/003242
(87) International publication number: WO 2008/050232

(56) References cited:
- EP-A- 0 446 099
- FR-A- 2 833 997
- FR-A- 2 849 107
- GB-A- 2 419 938
- US-A- 3 937 197

## Description

The present invention relates to a multi-arm connection element used for the purpose of feeding the desired amount of the refrigerant fluid coming from the main heat exchanger and the expansion tank to the auxiliary heat exchanger and then delivered to the system after being collected utilized in coolant circuits comprising a main heat exchanger, an auxiliary heat exchanger fed by using the refrigerant fluid from the primary heat exchanger and an expansion tank.

### Prior art

The automobile cooling circuit is a closed circuit wherein the refrigerant fluid used for the purpose of controlling the temperature of the motor is cooled by air in a main heat exchanger known as the radiator. In a similar circuit as described in patent no GB 457617, a T-shaped fitting provides a connection between radiator and motor thanks to its two horizontal arms and one vertical arm. Two horizontal arms are connected to pipes of the main passage between radiator outlet and inlet. Vertical arm is screwed at the top of the water jacket in order to form first lateral passage. Moreover, end of the bypass pipe is connected to a port provided on the fitting, the other end of which is connected to the bottom of the water jacket so as to form second lateral passage. However, such a circuit is also generally used for cooling the motor oil or the transmission oil as well as the motor and an auxiliary heat exchanger is integrated to the circuit for this type of additional operations whereby some portion of the refrigerant fluid is fed to this auxiliary heat exchanger at the outlet of the radiator by means of a collector/ distributor connector element and then is recollected to be delivered to the rest of the circuit. FR 2571431 discloses such a circuit which comprises an auxiliary heat exchanger for cooling lubricating oil and two thermostatic valves for distrubuting fluid between auxiliary heat exchanger and radiator according to the temperature of the fluid at the engine outlet. However, such a circuit is too much complicated as two different thermostatic valves are used and additional connections for other circuit units such as expansion tank are needed.

FR2388133 is related to a circuit which expansion tank is connected to the two auxiliary heat exchanger and a radiator by means of a four way connector element. However, four way connector element does not comprise any flow rate controller such as a valve or diaphragm.

This connector element as described in patent no GB2366365A can provide the control of the flow rate by means of a flow control valve element integrated therein. According to this technique, the connector element is a four way element comprising in total a main delivery passage connected to the radiator outlet, a main return passage disposed in the same axis thereto and the inlet and outlet of the auxiliary heat exchanger connected to two auxiliary passages being perpendicular to the main axis formed by main inlet and outlet and disposed consecutively along this axis. The pressure difference created by an abutment at the end of the spring element provides to feed the desired amount of the coolant fed by the radiator outlet to flow through the auxiliary heat exchanger. However, this implementation decreases efficiency significantly by causing a considerable amount of loss in pressure in the circuit.

As described in patent no GB2419938, in order to improve this performance, the interior cross-section of the connector element can be configured to have a stable profile. According to the technique used in this connector element having again a four way configuration, an inlet divider wall starting just after the main inlet port extending along the main axis to the auxiliary passage by joining with a wall extended from the body of the connector element just behind the auxiliary passage forms a D-section passage for the fluid inside the connector element up to the passage feeding the auxiliary heat exchanger. The created high pressure in the zone where the auxiliary feed passage joins with the main body provides to feed the auxiliary heat exchanger. Similarly, a low pressure zone is formed where the auxiliary feed passage joins with the main body by the configuration in the body of the connector element, providing the connector element to collect the returning coolant fluid and feed the rest of the system. In this technique, the auxiliary passages are disposed vertical to the main axis formed by the inlet and outlet and sequential along this axis. Although more advantageous in terms of pressure losses, the two auxiliary passages being disposed on the main flow axis necessitates to enlarge the dimensions of the components to prevent cramping, whereas the connector element of the said invention should be small dimensioned for usability in cramped motor cabins.

A configuration that is smaller in dimension and more effective is described in patent no EP0446099. Again the connector comprises four pipes being a radiator outlet, a motor outlet and the inlet, outlet of the auxiliary heat exchanger, the secondary pipes although located in an axis perpendicular to the main inlet outlet axis but not sequential along this axis, disposed to be aligned and on the opposite sides of the axis. The flow rate fed to the inlet pipe of the auxiliary heat exchanger can be adjusted by means of a diaphragm situated at the main inlet outlet axis.

The connector elements described in state of the art have a total of four way configuration in order to feed and to recollect some portion of the refrigerant fluid received from the radiator outlet to the auxiliary heat exchanger, and then to deliver to the rest of the circuit. The expansion tank, one of the vital units in the cooling circuit, is generally connected to a section of the circuit by using an additional connection area. In cases when the motor area allows, connecting the expansion tank to the circuit by means of the connector element of the present invention will be a great advantage. However, a circuit wherein the same flow rate circulates in the cooling system and feeds the same amount of refrigerant to the auxiliary heat exchanger, while the outlet of the expansion tank can be connected to this connector element in one motor alternative, it may not be possible in another motor alternative due to problems of space. In such a case, using different connector elements having specifically designed diaphragm configurations for each alternative will be required.

The present invention is designed to include a fifth passage that will be connected to the expansion tank outlet in order to utilize the above mentioned advantage. The most important innovation of the present invention is that the same fluid flow rate is maintained with a single design in the body and the diaphragm, calibrated according to the auxiliary heat exchanger type whether the expansion tank connection is present or absent. Accordingly, a single design will be able to be utilized in all the motor alternatives wherein the same cooling circuit is used by canceling only one passage.

The present invention is explicated in detail with reference to the attached figures below, where:
Figure 1 - is the cooling circuit wherein the connector element of the present invention is used.
Figure 2 - is the perspective view of the connector element.
Figure 3 - is the sideways view of the connector element.
Figure 4 - is the front view of the connector element.
Figure 5 - is a cross-sectional view of the connector element.
Figure 6 - is another cross-sectional view of the connector element.
Figure 7 - is the view of the diaphragm configurations that can be an alternative for Figure 5.
Figure 8 - is the top view of the connector element.
Figure 9 - is the view of the connector element not having the return passage for the expansion tank.
Figure 10 - are the alternative geometries of the connector element.
Figure 11 - are the examples of the outer surface shapes of passages for connecting the connector element to the rest of the system.

The elements illustrated in the figures are numbered as follows:
- 10.: Connector element
- 11.: Main inlet arm
- 12.: Main outlet arm
- 13.: Auxiliary heat exchanger feed arm
- 14.: Auxiliary heat exchanger collector arm
- 15.: Expansion tank collector arm
- 16.: Diaphragm
- 17.: Opening
- 19.: Body
- 30.: Radiator
- 40.: Auxiliary heat exchanger
- 41.: Connector
- 42.: Channel
- 43.: Connector
- 44.: Channel
- 45.: Connector
- 46.: Hose
- 47.: Connector
- 50.: Motor
- 70.: Pump
- 80.: Thermostat valve

### The detailed explication of the present invention

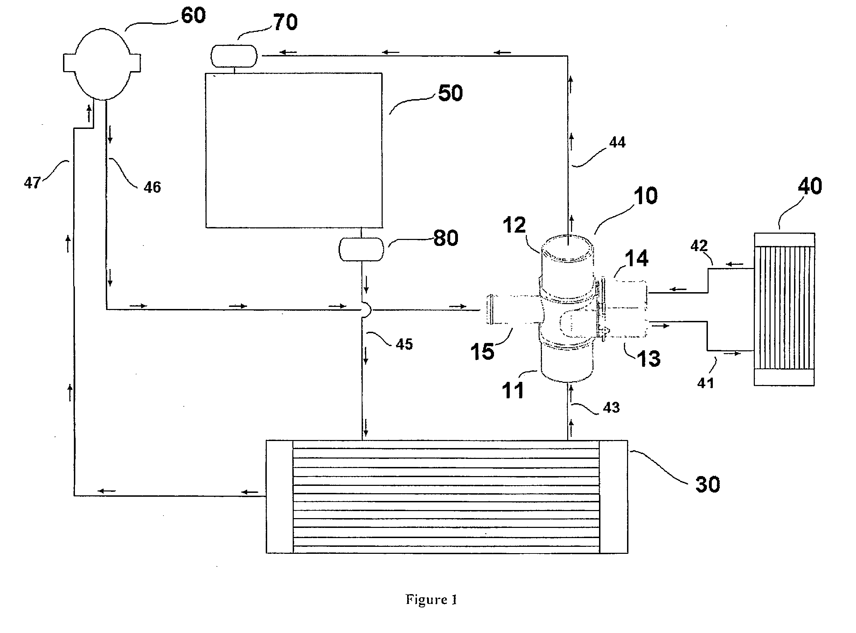

As can be seen in Figure 1, in the cooling circuit wherein the connector element of the present invention will be used, the heated fluid that is discharged from the motor (50), if above a determined temperature, passes from the thermostat valve (80) to be delivered to the radiator (30) with the connector no 45. After being cooled in the radiator by air, some portion thereof is fed to the expansion tank (60) with connector no 47 and some portion to the main inlet arm (11) of the connector element (10) with connector no 43. The fluid returning from the expansion tank (60) is fed to the connector element (10) by the hose (46) of the connector element (10) connected to the expansion tank collector arm (15). While some portion of the refrigerant fluid fed to the connector element (10) from the radiator (30) and the expansion tank (60) is directed by means of a diaphragm (16) at the inner section of the connector element to be delivered to the auxiliary heat exchanger feed arm (13), and some portion continues to the main outlet arm (12). The refrigerant fluid is delivered to the auxiliary heat exchanger (40) from the auxiliary heat exchanger feed arm (13) of the connector element (10) by means of the connector no 41. The refrigerant fluid circulating in the auxiliary heat exchanger (40) for cooling the oil, is delivered from the auxiliary heat exchanger (40) to the auxiliary heat exchanger collector arm (14) of the connector element (10) through the channel no 42 and joins here with the refrigerant fluid received from the main inlet arm (11), flows to the main outlet arm (12) of the connector element, and from there to the pump (70) through channel no 44 and is re-fed to the motor completing the circuit.

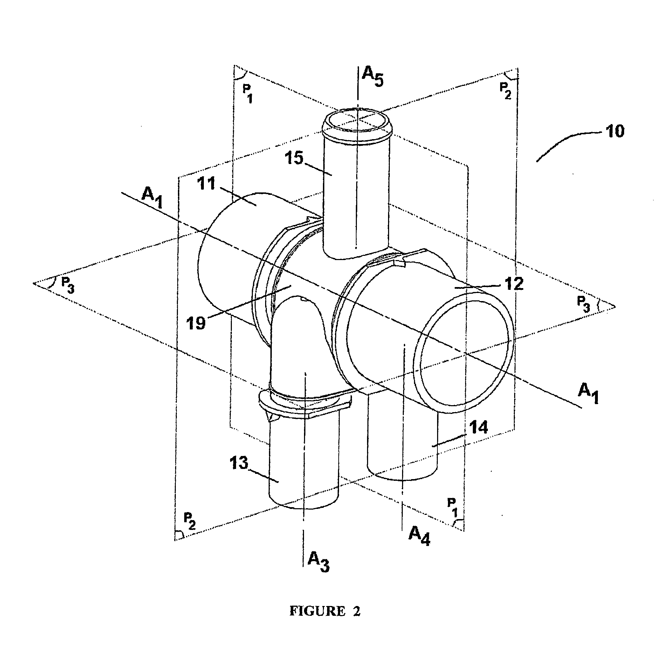

In Figure 2, a perspective view of the connector element is illustrated. In the figure, the planes that pass through the geometric center of the element that are perpendicular to each other are shown as P₁, P₂ and P₃

Each of the five arms of the connector element opens into a body (19) section wherein the diaphragm (16) is also disposed. The cross-section of the arms (11, 12, 13, 14, 15) and the body (19) is preferably shaped circularly.

The main inlet arm (11), the body (19) and the main outlet arm (12) are disposed in this sequence and preferably on the same line, so that the line passing from the center of these three elements forms the main inlet-outlet axis (A₁).

The auxiliary heat exchanger feed and collector arms (13, 14) open to the body (19) part of the connector element (10) being disposed on both sides of the plane P₁ that passes vertically through the center of the connector element (10) as per Figure 2 and having the main inlet-outlet axis (A₁) thereon and being equidistant from plane P₁. The central axis A₃ of the auxiliary heat exchanger feed arm (13) and the central axis A₄ of the collector arm (14) are vertical to plane P₃ that is disposed horizontally as per Figure 2.

The expansion tank collector arm (15) opens to the body (19) part such that the axis (A₅) thereof is vertical to plane P₃ and remaining on the other side of the plane with respect to the auxiliary heat exchanger feed and collector arms (13, 14). The expansion tank axis (A₅) is on the intersecting line of planes P₁ and P₂ passing through the center of the connector element.

The cross-sections of the main inlet arm (11) and the main outlet arm (12) are considerably larger than the cross-sections of the auxiliary heat exchanger feed and collector arms (13, 14) and the expansion tank collector arm (15).

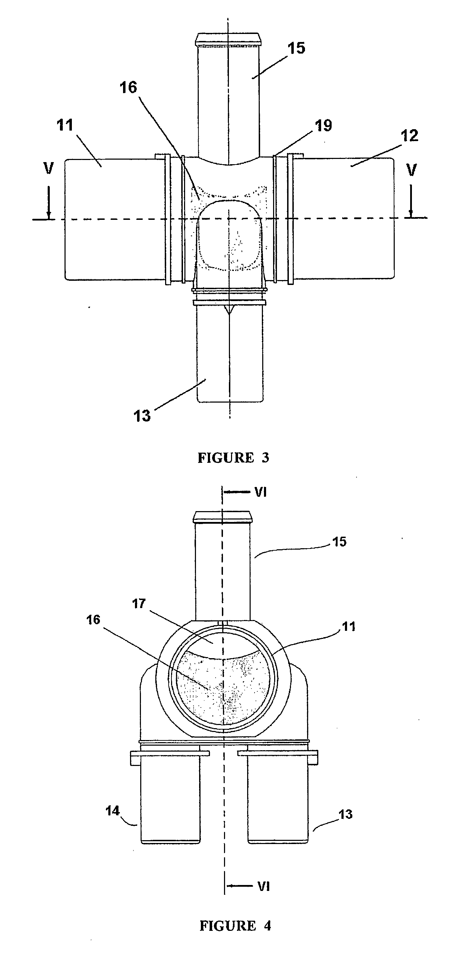

In Figure 3 the sideway view of the connector element and in Figure 4 the front view in the direction of the main inlet arm (11) are given. The diaphragm (16), directing the refrigerant fluid to the auxiliary heat exchanger feed arm (13), is disposed in the body (19) part of the connector element (10) such that it forms a barrier for the fluid on the main inlet-outlet axis (A₁). The diaphragm (16) is such that the inner cross-section of the connector element in the body (19) part is not entirely covered and the fluid continues to flow from the remaining opening (17) towards the main outlet arm (12).

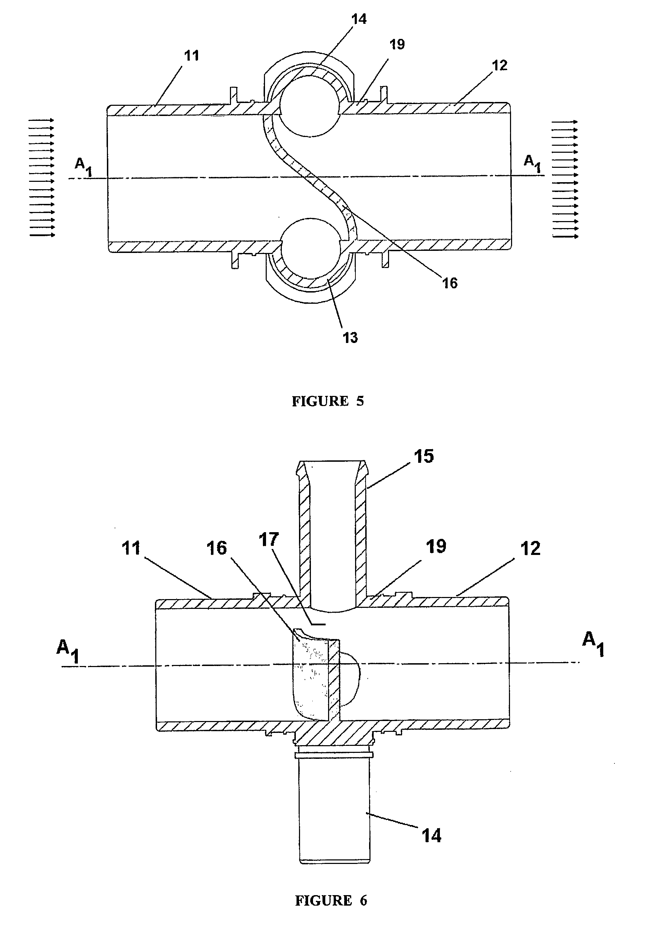

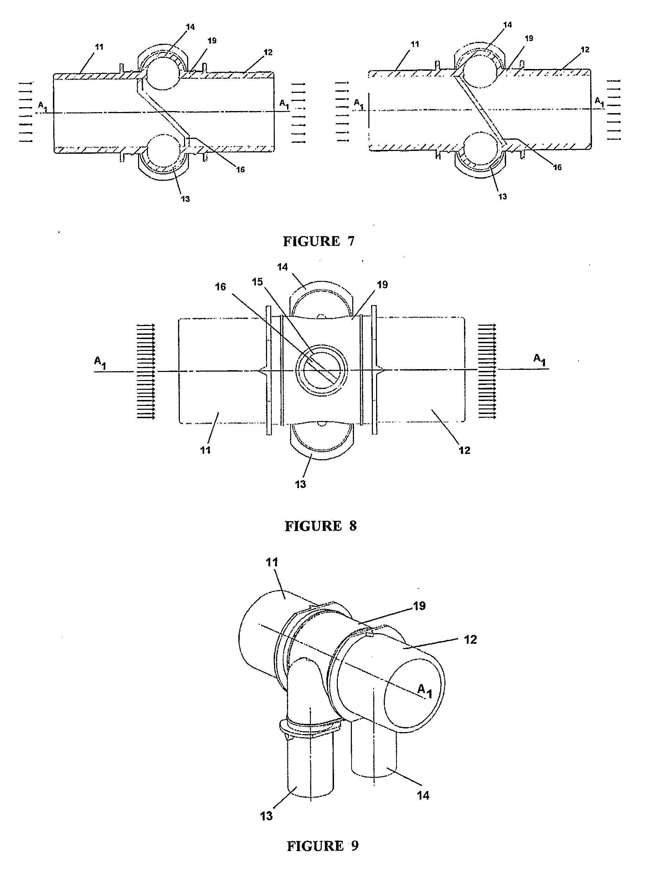

The configuration of the diaphragm (16) is explicated in Figures 4, 5 and 6 and 7. The diaphragm (16), not limited to the geometries in these figures, starts from the front of where the auxiliary heat exchanger collector arm (14) joins with the body (19) in the direction of the main inlet and ends behind the part where the auxiliary heat exchanger feed arm (13) joins with the body (19) and is configured as a wall adjoining to the body (19). The diaphragm (16) is vertical to the plane P₃ and disposed such that a calibrated opening (17) is left therein, not entirely covering the inner cross-section of the connector element. The diaphragm (16) can have an "S" shaped cross-section as illustrated in Figure 5 or can have a linear, angular-linear or a similar configuration as shown in Figure 7, with the condition of being symmetrical with respect to planes P₁ and P₂.

In another state of the art embodiment, the diaphragm can be configured not as a single piece but having a multi-piece configuration formed of two or more walls disposed spaced apart or sequentially along the main inlet-outlet axis.
The most important innovative contribution of the connector element (10) to the state of the art is having an expansion tank collector arm (15) and the flow rate and pressure of the fluid fed to the auxiliary heat exchanger (40) not being affected in case this said arm is cancelled. In Figure 8, the top view of the element (10) is given when there is an expansion tank collector arm (15) present.

Since the connector element (10) is symmetrical with respect to planes P₁ and P₂, in the top view the diaphragm (16) is disposed such that the path for the fluid flowing from the expansion tank collector arm (15) is separated into two identical channels. In Figure 9, the view of the element (10) is given when there is no expansion tank collector arm (15) present.

The innovative present invention furthermore allows the passage for a fluid of the same amount and pressure to the auxiliary heat exchanger feed arm (13) with a determined main inlet flow rate in the presence or absence of the auxiliary heat exchanger collector arm (14).

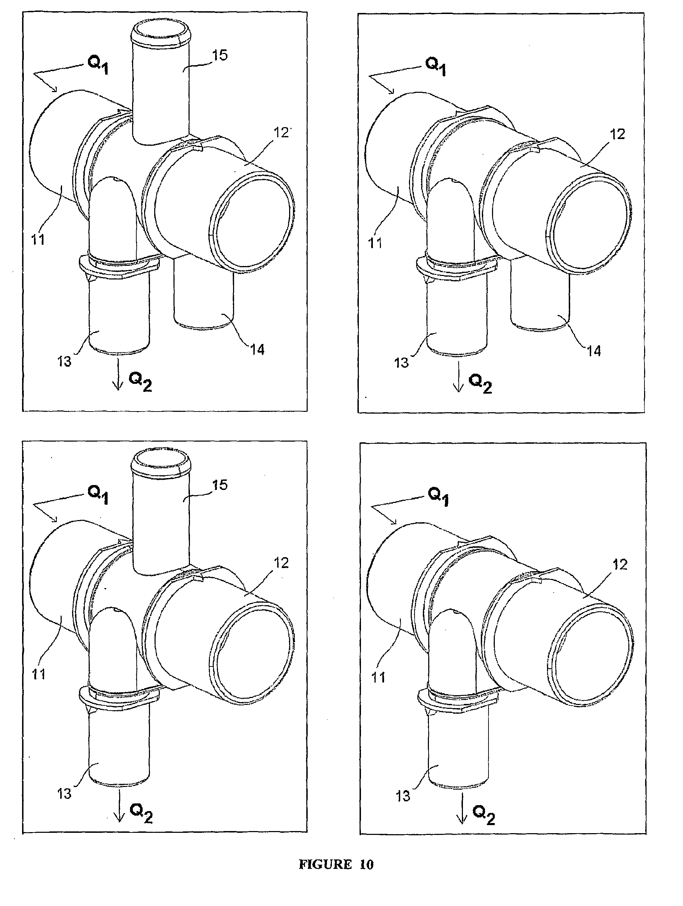

In summary, by means of the diaphragm configuration and the opening being calibrated for a certain main inlet flow rate (Q₁), the connector element (10) of the present invention is such that the auxiliary heat exchanger is always fed with a fluid of the same flow rate (Q₁) in the presence or absence of the expansion tank collector arm (15) or in the presence or absence of the auxiliary heat exchanger collector arm (14). In Figure 10, the possible versions of the element that can be used in the same technical conditions are shown. The radiator outflow rate, that is the main inlet flow rate (Q₁) being constant, the flow rate fed to the auxiliary heat exchanger is always the same in all conditions.

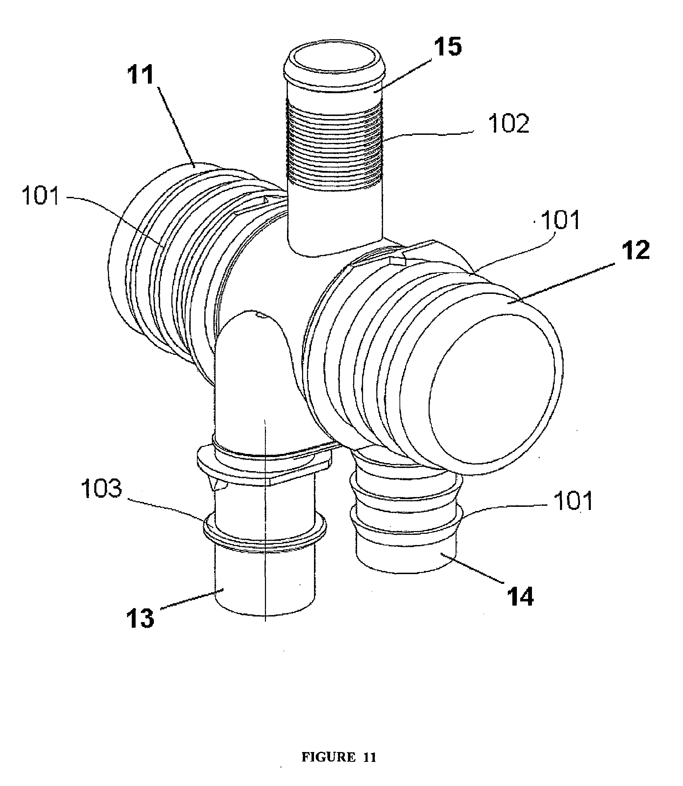

Each five arm is long enough so that rubber hoses or resilient ducts can be fastened for connecting to the rest of the circuit. The outer surface of the arms can be configured separately for being suitable to different types of joints. These different surface shapes can be a pine shape (101) adaptable for implementing plastic injection welding joint on the hose/resilient duct, or a serrated shape (102) suitable for attachment with a clamp for fixing the hose/resilient duct on the connection element, or a siphon shape (103) for locking the hose/resilient duct to the respective arm of the connector element by means of a quick fastening element. In Figure 11, an example is illustrated wherein the main inlet arm (11), main outlet arm (12) and the auxiliary heat exchanger collector arm (14) have a pine shape (101), the expansion tank collector arm (15) a serrated shape (102) and the auxiliary heat exchanger feed arm (13) a siphon shape (103).

## Claims

1. A connector element (10) for a closed circuit cooling system comprising of a motor (50), a main heat exchanger (30), an auxiliary heat exchanger (40) and preferably an expansion tank (60), said connector element comprising at least three, at most five arms where the said three arms being a main inlet arm (11), a main outlet (12) arm, and an auxiliary heat exchanger feeder arm (13) each of which preferably having a circular cross section and opening to a body (19) of preferably circular cross section wherein said main inlet arm (11), said body (19) and main outlet arm (12) are located on a main inlet - outlet axis (A1) and a horizontal plane (P3) passing through said axis (A1) divides the main inlet arm (11), the body (19) and the main outlet arm (12) into two halves such that the auxiliary heat exchanger feed arm (13) is located on one side of the said plane (P3) in such a way that it's central axis is disposed vertically to the said plane (P3), said connector element futher comprising a diaphragm (16) that is provided in the inner section of the said body (19) to direct some portion of the flow to the auxiliary heat exchanger feeder arm (13), such that it terminates at the back of where the auxiliary heat exchanger feeder arm (13) joins to the body (19) ; **characterized in that**
- the diaphragm (16) is disposed such that it does not adjoin to the body (19) from all the walls but leaves an opening (17) at a place on the other side of plane P3 with respect to auxiliary heat exchanger feeder arm (13), and
- it is substantially perpendicular to the said plane (P3) and its cross-section that plane (P3) is substantially either "S" shaped or linear, angular linear or curvilinear.

2. The connector element as in claim 1 wherein an expansion tank collector arm (15) having preferably a circular cross section is joined to the said body (19) in such a way that its central axis is disposed vertically to the said plane (P₃) and it is joined in an area where the said opening (17) is located.

3. The connector element as claimed in claim 1 or 2 wherein an auxiliary heat exchanger collector arm (14) having preferably a circular cross section is joined to the said body (19) in such a way that it is on the same side of the plane P3 with the auxiliary heat exchanger feed arm (13) and it's central axis is disposed vertically to the said plane (P₃).

4. The connector element as in claims 1 to 3 wherein said diaphragm (16) starts from the front of where the auxiliary heat exchanger collector arm (14) joins with the body (19) in the direction of the main inlet (11).

5. The connector element as claimed in Claim 4 wherein said auxiliary heat exchanger feeder arm (13) and auxiliary heat exchanger collector arm (14) are connected laterally to the said body (19) such that their central axes (A3, A4) lie on a plane (P2) preferably perpendicular to the said main inlet-outlet axis (A1).

6. The connection element as claimed in Claim 4 and 5 wherein central axis (A5) of the said expansion tank collector arm (15) is preferably located on the same plane (P2) with the central axes (A3, A4) of the said arms (13, 14).

7. The connector element as claimed in claim 6 wherein the cross sections of main inlet and main outlet arms (11,12) are substantially larger than the cross sections of auxiliary exchanger feeder (13), collector (14) and expansion tank collector arms (15).

8. The connector element as claimed in claim 4 to 7 wherein said element is manufactured in one batch to comprise each of the said arms (11-15), said body (19) and said diagram (16) preferably in a single piece by means of injection method.

9. The connector element as claimed in claim 4 to 8 wherein each arm (11-15) is long enough to be joined to the rest of the circuit via hoses or flexible pipes and said arms (11-15) can be independently fastened to said hoses or flexible pipes by means of clamps, injection welding or quick connection elements.

10. The connector element as claimed in any of the above claims wherein said cooling circuit is a cooling circuit used in vehicles.

## Patentansprüche

1. Verbindungselement (10) für ein Kühlsystem mit geschlossenem Kreislauf, das aus einem Motor (50), einem Hauptwärmetauscher (30), einem Hilfswärmetauscher (40) und vorzugsweise einem Erweiterungstank (60) gebildet ist, wobei das Verbindungselement
wenigstens drei und höchstens fünf Arme umfasst, wobei die drei Arme ein Haupteinlassarm (11), ein Hauptauslassarm (12) und ein Hilfswärmetauscherspeisearm (13) sind, die jeweils vorzugsweise einen kreisförmigen Querschnitt aufweisen und sich zu einem Körper (19) mit vorzugsweise kreisförmigem Querschnitt öffnen, wobei der Haupteinlassarm (11), der Körper (19) und der Hauptauslassarm (12) an einer Haupt-Einlass-Auslass-Achse (A1) angeordnet sind und eine horizontale Ebene (P3), die durch die Achse (A1) verläuft, den Haupteinlassarm (11), den Körper (19) und den Hauptauslassarm (12) in zwei Hälften teilt, derart, dass der Hilfswärmetauscherspeisearm (13) auf einer Seite der Ebene (P3) angeordnet ist, derart, dass seine Mittelachse vertikal zu der Ebene (P3) angeordnet ist, wobei das Verbindungselement ferner eine Membran (16) aufweist, die in dem Innenabschnitt des Körpers (19) vorgesehen ist, um einen Teil des Flusses zu dem Hilfswärmetauscherspeisearm (13) zu lenken, derart, dass sie am Ende endet, wo der Hilfswärmetauscherspeisearm (13) sich mit dem Körper (19) verbindet, **dadurch gekennzeichnet, dass**
- die Membran (16) derart angeordnet ist, dass sie nicht an allen Wänden am Körper (19) anliegt, sondern eine Öffnung (17) an einer Stelle auf der anderen Seite der Ebene (P3) in Bezug auf den Hilfswärmetauscherspeisearm (13) belässt, und
- sie im Wesentlichen senkrecht zu der Ebene (P3) ist und ihr Querschnitt, dieser Ebene (P3) im Wesentlichen entweder "S"-förmig oder linear, winkelförmig linear oder krummlinig ist.

2. Verbindungselement nach Anspruch 1, wobei ein Erweiterungstankaufnahmearm (15) mit einem vorzugsweise kreisförmigen Querschnitt mit dem Körper (19) verbunden ist, derart, dass seine Mittelachse vertikal zu der Ebene (P3) angeordnet ist und in einem Bereich verbunden ist, wo die Öffnung (17) angeordnet ist.

3. Verbindungselement nach Anspruch 1 oder 2, wobei ein Hilfswärmetauscheraufnahmearm (14) mit einem vorzugsweise kreisförmigen Querschnitt mit dem Körper (19) verbunden ist, derart, dass er auf derselben Seite der Ebene (P3) wie der Hilfswärmetauscherspeisearm (13) ist und seine Mittelachse vertikal zu der Ebene (P3) angeordnet ist.

4. Verbindungselement nach den Ansprüchen 1 bis 3, wobei die Membran (16) an der Vorderseite dort beginnt, wo sich der Hilfswärmetauscheraufnahmearm (14) in Richtung des Haupteinlasses (11) mit dem Körper (19) verbindet.

5. Verbindungselement nach Anspruch 4, wobei der Hilfswärmetauscherspeisearm (13) und der Hilfswärmetauscheraufnahmearm (14) seitlich mit dem Körper (19) verbunden sind, derart, dass ihre Mittelachsen (A3, A4) in einer Ebene (P2) liegen, die vorzugsweise senkrecht zur Haupt-Einlass-Auslass-Achse (A1) ist.

6. Verbindungselement nach Anspruch 4 und 5, wobei die Mittelachse (A5) des Erweiterungstankaufnahmearms (15) vorzugsweise in derselben Ebene (P2) wie die Mittelachsen (A3, A4) der Arme (13, 14) angeordnet ist.

7. Verbindungselement nach Anspruch 6, wobei der Querschnitt des Haupteinlass- und Hauptauslassarms (11, 12) wesentlich größer ist als der Querschnitt des Hilfswärmetauscherspeise- (13), Hilfswärmetauscheraufnahme- (14) und Erweiterungstankaufnahmearms (15).

8. Verbindungselement nach Anspruch 4 bis 7, wobei das Element in einem Durchgang durch ein Spritzgießverfahren hergestellt wird, derart, dass es die einzelnen Arme (11-15), den Körper (19) und die Membran (16) in einem Stück umfasst.

9. Verbindungselement nach Anspruch 4 bis 8, wobei jeder Arm (11-15) lang genug ist, um mit dem übrigen Kreislauf über Schläuche oder flexible Rohre verbunden zu werden und die Arme (11-15) mithilfe von Klemmen, durch Spritzschweißen oder mit Schnellverbindungselementen unabhängig voneinander an den Schläuchen oder flexiblen Rohren befestigt werden können.

10. Verbindungselement nach einem der vorangehenden Ansprüche, wobei der Kühlkreislauf ein Kühlkreislauf ist, der in Fahrzeugen benutzt wird.

## Revendications

1. Un élément connecteur (10) pour un système de refroidissement en circuit fermé, comprenant un moteur (50), un échangeur de chaleur principal (30), un échangeur de chaleur auxiliaire (40) et de préférence un réservoir d'expansion (60), ledit élément connecteur comprenant au moins trois, au plus cinq bras où lesdits trois bras sont un bras d'entrée principal (11), un bras de sortie principal (12) et un bras d'alimentation de l'échangeur de chaleur auxiliaire (13) dont chacun présente de préférence une section transversale circulaire et s'ouvre à un corps (19) avec de préférence une section transversale circulaire où ledit bras d'entrée principal (11), ledit corps (19) et ledit bras de sortie principal (12) sont positionnés sur un axe principal entrée-sortie (A1) et où un plan horizontal (P3) passant par ledit axe (A1) divise le bras d'entrée principal (11), le corps (19) et le bras de sortie principal (12) en deux de telle sorte que le bras d'alimentation de l'échangeur de chaleur auxiliaire (13) est situé sur un côté dudit plan (P3) de telle sorte que son axe central est situé perpendiculairement audit plan (P3), ledit élément connecteur comprenant en outre un diaphragme (16) qui est disposé dans la partie intérieure dudit corps (19) afin de diriger une partie de flux au bras d'alimentation de l'échangeur de chaleur auxiliaire (13), de telle sorte qu'il se termine à l'arrière de l'endroit où le bras d'alimentation de l'échangeur de chaleur auxiliaire (13) se joint au corps (19), **caractérisé en ce que**
- le diaphragme (16) est disposé de manière à ne pas se joindre au corps (19) à partir des toutes les parois mais laisse une ouverture (17) à un endroit sur l'autre côté du plan (P3) par rapport au bras d'alimentation de l'échangeur de chaleur auxiliaire (13), et
- il est considérablement perpendiculaire audit plan (P3) et sa section transversale, ce plan (P3) est substantiellement en forme de S ou linéaire, angulaire ou curviligne.

2. Élément connecteur selon la revendication 1, où un bras collecteur du réservoir d'expansion (15) avec de préférence une section transversale circulaire se joint audit corps (19) de telle sorte que son axe central est situé perpendiculairement audit plan (P3) et il se joint dans une zone où ladite ouverture (17) est située.

3. Élément connecteur selon la revendication 1 ou 2, où un bras collecteur de l'échangeur de chaleur auxiliaire (14) avec de préférence une section transversale circulaire se joint audit corps (19) de telle sorte qu'il se trouve au même côté du plan (P3) comme le bras d'alimentation de l'échangeur de chaleur auxiliaire (13) et son axe central est situé perpendiculairement audit plan (P3).

4. Élément connecteur selon les revendications de 1 à 3 où ledit diaphragme (16) débute à partir de l'avant de l'endroit où le bras collecteur de l'échangeur de chaleur auxiliaire (14) se joint au corps (19) dans le sens de l'entrée principale (11).

5. Élément connecteur selon la revendication 4 où ledit bras d'alimentation de l'échangeur de chaleur auxiliaire (13) et ledit bras collecteur de l'échangeur de chaleur auxiliaire (14) sont reliés latéralement audit corps (19) de telle sorte que leurs axes centraux (A3, A4) se situent sur un plan (P2) de préférence perpendiculaire audit axe principal entrée-sortie (A1).

6. Élément connecteur selon les revendications 4 et 5 où l'axe central (A5) dudit bras collecteur du réservoir d'expansion (15) se situe de préférence sur le même plan (P2) comme les axes centraux (A3, A4) desdits bras (13, 14).

7. Élément connecteur selon la revendication 6 où les sections transversales du bras d'entrée principal et du bras de sortie principal (11, 12) sont considérablement plus grandes que les sections transversales du bras d'alimentation de l'échangeur de chaleur auxiliaire (13), du bras collecteur de l'échangeur de chaleur auxiliaire (14) et du bras collecteur du réservoir d'expansion (15).

8. Élément connecteur selon les revendications de 4 à 7 où ledit élément est produit en un seul lot pour comprendre chacun desdits bras (11-15), dudit corps (19) et dudit diaphragme (16) de préférence en une seule pièce par la méthode d'injection.

9. Élément connecteur selon les revendications de 4 à 8 où chaque bras (11-15) est suffisamment long pour être relié au reste du circuit par l'intermédiaire de tuyaux ou conduites flexibles et lesdits bras (11-15) peuvent être de façon indépendante fixés auxdits tuyaux ou conduites flexibles par l'intermédiaire de pinces, soudage par injection ou éléments de raccord rapide.

10. Élément connecteur selon l'une quelconque des revendications précédentes où ledit circuit de refroidissement est un circuit de refroidissement utilisé dans les véhicules.
